# EUROPEAN PATENT SPECIFICATION

(11) **EP 2 919 973 B1**
(45) Date of publication and mention of the grant of the patent: **19.12.2018**
(21) Application number: 13795699.1
(22) Date of filing: 30.10.2013
(51) Int. Cl.: B29D 11/00

(54) **METHOD OF MANUFACTURING AN OPTICAL LENS**
VERFAHREN ZUR HERSTELLUNG EINER OPTISCHEN LINSE
PROCÉDÉ DE FABRICATION D'UNE LENTILLE OPTIQUE

(30) Priority: 19.11.2012 EP 12306433
(43) Date of publication of application: 23.09.2015
(73) Proprietor: Essilor International, 94220 Charenton-le-Pont (FR)
(72) Inventor: GOURRAUD, Alexandre, F-94220 Charenton-le-pont (FR); GACOIN, Eric, F-94220 Charenton-le-pont (FR); LE BOUILLONNEC, Pascal, F-94220 Charenton-le-pont (FR)
(74) Representative: Cabinet Novitech
(86) International application number: PCT/EP2013/072732
(87) International publication number: WO 2014/075925

(56) References cited:
- WO-A1-94/06598
- WO-A1-98/45750
- JP-A- 2012 058 648
- US-A1- 2010 228 375

## Description

The invention relates to a method of manufacturing an optical lens and a method for controlling a lens manufacturing method.

The discussion of the background of the invention herein is included to explain the context of the invention. This is not to be taken as an admission that any of the material referred to was published, known or part of the common general knowledge at the priority date of any of the claims.

An optical lens is typically made of plastic material and generally has two opposing surfaces which co-operate with one another to provide a required refractive property, generally corresponding to the wearer's prescription. When the positioning or shape of one of these surfaces with respect to the other is inaccurate, the required refractive property may not be respected.

Manufacturing of an optical lens to the required refractive property typically includes machining the surface of a semi-finished lens or lens blank. Typically, a semi-finished lens has a finished surface, for example the front surface and an unfinished surface, for example the back surface. By machining the back surface of the lens to remove material, the required shape and positioning of the back surface with respect to the front surface for the desired corrective prescription can be generated.

During manufacturing of the lens it is important that the semi-finished lens is securely maintained in an accurate position on a blocker during the various manufacturing operations in order to prevent the generation of optical errors.

Conventionally, a semi-finished lens is provided with engraved markings on the finished surface. The engraved markings define a reference system of the design of the finished surface of the lens.

For some optical designs, for example when both surfaces have asymmetrical designs, controlling accurately the relative position of the optical surfaces is very important so as to guarantee the desired optical function.

When after having manufactured an optical lens, a skilled person wishes to check the relative positions of the optical surfaces of the manufactured optical lens; he needs to realize a full optical function measurement or a 3D surfaces measurement of the optical lens. These methods are very time consuming and costly.

Therefore, there is a need for a method of manufacturing an optical lens that allows an easy check of the relative position of the optical surfaces of the manufactured optical lens.

WO 94/06598 A1 discloses a method according to the preamble of claim 1.

To this end, the invention proposes a method of manufacturing an optical lens, the method comprising:
- a lens member providing step during which a lens member comprising a first surface and a first reference system of the first surface is provided, the first reference system being identified by first markings on the first surface,
- a surface data providing step during which surface data corresponding to a second surface and the position of the second surface relative to the first surface of the optical lens to be manufactured are provided,
- a lens member blocking step during which the lens member is blocked in a machining position,
- a machining step during which the second surface of the optical lens is machined according to the surface data,
- a second markings determining step during which second markings identifying a second reference system of the second surface are determined according at least to optical data representing the refractive properties of the optical lens and to observation data representing observation conditions in which the first and second markings are to be observed, and
- a second markings providing step during which the second markings are provided on the second surface of the optical lens.

Advantageously, the second markings being determined according to the refractive properties of the optical lens and the observation condition, checking the accuracy of the relative position of the first and second surfaces in the observation condition may be rendered straight forward.

According to further embodiments which can be considered alone or in combination:
- the method further comprises:
   - a reference system determining step during which the first and second reference systems are determined by determining the positions of the first and second markings in the observation conditions corresponding to the observation data, and
   - a comparison step during which the positions of the first and second reference systems are compared so as to determine the positioning error between the first and second surfaces; and/or
- the method further comprises a sorting step during which the manufactured optical lens is accepted if the positioning error between the first and second surfaces is smaller than or equal to a threshold value and is set aside if the positioning error between the first and second surfaces is greater than said threshold value; and/or
- during the determining step the positions on the first and second markings are measured using a measuring optical device and the observation data represents at least the position of the optical lens relative to the measuring optical device; and/or
- during the determining step, the relative position between the first and second markings is determined in the observation conditions by an operator; and/or
- during the second marking determining step the second markings are determined so as to appear at the same position as the first markings in the observation conditions when the second surface is correctly positioned relatively to the first surface; and/or
- during the second marking determining step the second markings are determined so as to take into account a positioning error tolerance; and/or
- the optical data represent at least the design of the first and second surfaces and the relative position of the second surface relative to the first surface; and/or
- during the second markings providing step the optical lens is blocked in the same position as during the machining step; and/or
- the first and/or second markings are temporary markings; and/or
- the optical data represent at least the prescription of the wearer for which the optical lens is manufactured.

The invention also relates to a method for controlling a lens manufacturing method comprising:
- an optical lens manufacturing step during which an optical lens is manufactured according to a manufacturing method according to the invention using a manufacturing device,
- a positioning error determining step during which the positioning error of the first and second surfaces of the optical lens is determined,
- a recording step during which the positioning error is recorded,
wherein, the method further comprises repeating regularly optical lens manufacturing, positioning error determining and recording steps and checking the evolution of the positioning error over time, and
the evolution of at least one parameter of the manufacturing device used during the lens manufacturing process is checked over time and the evolution over time of the positioning error of the first and second surfaces of the optical lens is related with the evolution over time of the at least one parameter of the manufacturing device.

The invention further relates to a method for controlling a lens manufacturing method comprising:
- a master lens manufacturing step during which a master lens is manufactured according to a manufacturing method as claimed in any of claims 1 to 10 using a manufacturing device,
- a positioning error determining step during which the positioning error of the first and second surfaces of the master lens is determined,
- a recording step during which the positioning error is recorded,
wherein, the method further comprises repeating regularly master lens manufacturing, positioning error determining and recording steps and checking the evolution of the positioning error over time, and
the evolution of at least one parameter of the manufacturing device used during the lens manufacturing process is checked over time and the evolution over time of the positioning error of the first and second surfaces of the master lens is related with the evolution over time of the at least one parameter of the manufacturing device.

According to a further aspect, the invention relates to a computer program product comprising one or more stored sequences of instructions that are accessible to a processor and which, when executed by the processor, causes the processor to carry out the steps of the method according to the invention.

The invention further relates to a computer readable medium carrying one or more sequences of instructions of the computer program product according to the invention.

Furthermore, the invention relates to a program which makes a computer execute the method of the invention.

The invention also relates to a computer-readable storage medium having a program recorded thereon; where the program makes the computer execute the method of the invention.

The invention further relates to a device comprising a processor adapted to store one or more sequence of instructions and to carry out at least one of the steps of the method according to the invention.

Unless specifically stated otherwise, as apparent from the following discussions, it is appreciated that throughout the specification discussions utilizing terms such as "computing", "calculating", "generating", or the like, refer to the action and/or processes of a computer or computing system, or similar electronic computing device, that manipulate and/or transform data represented as physical, such as electronic, quantities within the computing system's registers and/or memories into other data similarly represented as physical quantities within the computing system's memories, registers or other such information storage, transmission or display devices.
Embodiments of the present invention may include apparatuses for performing the operations herein. This apparatus may be specially constructed for the desired purposes, or it may comprise a general purpose computer or Digital Signal Processor ("DSP") selectively activated or reconfigured by a computer program stored in the computer. Such a computer program may be stored in a computer readable storage medium, such as, but is not limited to, any type of disk including floppy disks, optical disks, CD-ROMs, magnetic-optical disks, read-only memories (ROMs), random access memories (RAMs) electrically programmable read-only memories (EPROMs), electrically erasable and programmable read only memories (EEPROMs), magnetic or optical cards, or any other type of media suitable for storing electronic instructions, and capable of being coupled to a computer system bus.

The processes and displays presented herein are not inherently related to any particular computer or other apparatus. Various general purpose systems may be used with programs in accordance with the teachings herein, or it may prove convenient to construct a more specialized apparatus to perform the desired method. The desired structure for a variety of these systems will appear from the description below. In addition, embodiments of the present invention are not described with reference to any particular programming language. It will be appreciated that a variety of programming languages may be used to implement the teachings of the inventions as described herein.

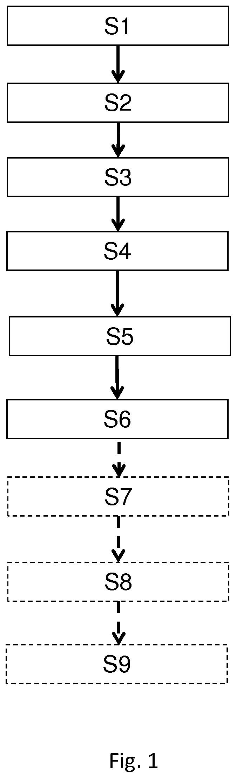

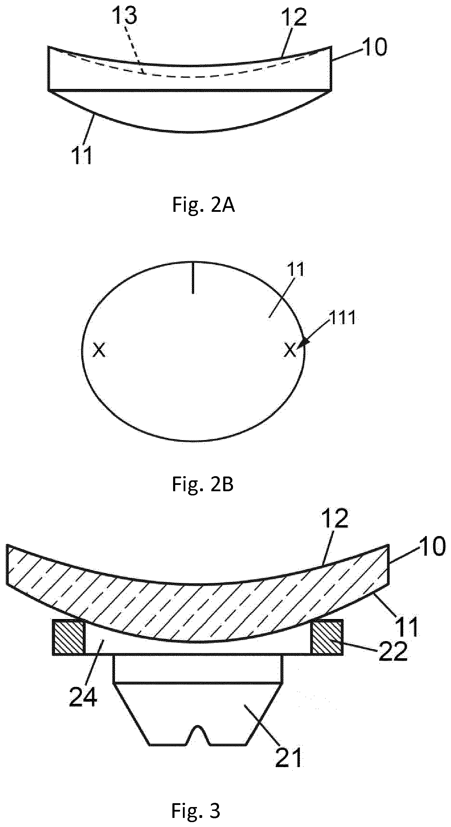

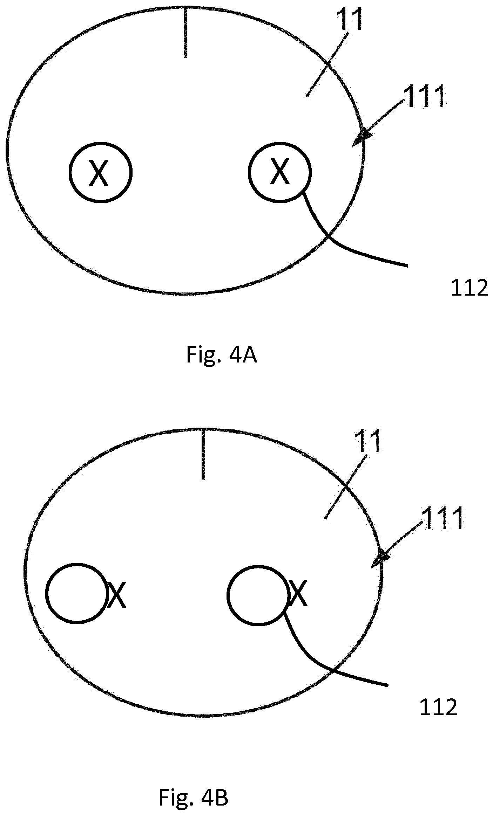

Non limiting embodiments of the invention will now be described with reference to the accompanying drawings in which:
o figures 1 is flowchart representing the steps of a method according to an embodiment of the invention,
o figure 2A is schematic view of an optical lens member to be manufactured according to embodiments of the invention,
o figure 2B is a planar view of a preformed surface of a semi-finished lens member to be machined according to embodiments of the invention,
o figure 3 is a schematic representation of a lens member and blocking device, and
o figure 4A to 4C are schematic representation of optical lenses manufactured according to the invention.

Elements in the figures are illustrated for simplicity and clarity and have not necessarily been drawn to scale. For example, the dimensions of some of the elements in the figure may be exaggerated relative to other elements to help improve the understanding of the embodiments of the present invention.

In the sense of the invention, a "Design" is a widely used wording known from the man skilled in the art to designate the set of parameters allowing defining an optical function of a generic optical system; each ophthalmic lens manufacturer has its own designs, particularly for aspherical lens and for progressive lens. As for an example, a progressive lens "design" results of an optimization of the progressive surface so as to restore a presbyope's ability to see clearly at all distances but also to optimally respect all physiological visual functions such as foveal vision, extra-foveal vision, binocular vision and to minimize unwanted astigmatisms.

In the sense of the invention "manufacturing parameters" are the setting parameters of the different manufacturing devices involved in the manufacturing method. In the sense of the invention "method parameter" includes any measurable parameters on the manufacturing devices used for the manufacturing of the lens.

According to an embodiment of the invention illustrated on figure 1, the method of manufacturing an optical lens according to the invention comprises at least:
- a lens member providing step S1,
- a surface data providing step S2,
- a lens member blocking step S3,
- a machining step S4,
- a second markings determining step S5, and
- a second markings providing step S6.

During the lens member providing step S1, a lens member as represented on figure 2A is provided.

As represented on figure 2A the lens member 10 has a first surface with a first design, for example a preformed front surface 11. In use of the resulting finished optical lens, the preformed front surface 11 is disposed nearest the object being viewed and a second surface 12 to be modified by the manufacturing process to provide for example the back surface 13 of the finished optical lens, represented by the dotted line. Second surface 12 is machined by a machining tool so that the back surface 13 is orientated with respect to and distanced from the front surface 11, according to the required optical prescription.

While in this embodiment of the invention, the first surface is the front surface of the lens member and the second surface is the back surface, it will be understood, that in alternative embodiments of the invention the first surface may be the back surface of the semi-finished lens member and the second surface may be the front surface.

Furthermore, while in this embodiment of the invention, the back surface of the optical lens is formed by the machining process, it will be understood, that in alternative embodiments of the invention both or either surfaces of the lens may be formed by the machining process.

Moreover, although the surface 13 to be manufactured is represented in Figure 2A as concave, it will be appreciated that this surface 13 could equally well be convex or any other curved surface.

With reference to Figure 2B, first markings 111 are provided on the first surface 11 of lens member 10 as reference features for defining a first reference system for positioning of the first design of the first surface 11.

According to an embodiment of the invention, the markings 111 may be engraved marking have a depth of a few micrometers so as to limit the risk of disturbing the wearer of the resulting finished optical lens.

According to an alternative embodiment of the invention, the markings 111 may be temporary markings that may be removed before providing the manufactured optical lens to the wearer.

During the surface data providing step S2, surface data corresponding to a second surface of the optical lens to be manufactured are provided. The surface data correspond to the surface to be manufactured on the second surface 12 and the position of the second surface relative to the first surface so that the optical lens combining the manufactured back surface 13 and the front surface provides the required optical function. The surface data can be determined according to the front preformed surface and the wearer's prescription.

During the lens member blocking step S3, the lens member 10 is blocked in a machining position. During the machining step S4 the second surface of the optical lens is machined according to the surface data such that the desired optical properties of the optical lens are respected.

According to an embodiment of the invention, the method may comprise prior to the lens member blocking step S3 a lens blocker providing step.

Referring now to Figure 3, a lens blocking device for blocking lens member 10 in the correct position for manufacturing processes comprises an insert 21 and a blocking ring 22. Blocking cast material 24 is poured into the cavity defined by the lower surface of the lens member 10, the insert 21 and the blocking ring 22. The blocking cast material 24 cools to solidify in order to provide a blocker for the lens member 10 at the desired positioning for machining. The blocker comprises the machining reference frame in which the machining data are expressed.

During the second markings determining step S5 second markings identifying a second reference system of the second surface are determined. The second markings are provided on the second surface of the optical lens during the second markings providing step S6.

The second markings are determined at least according to optical data and observation data.

The optical data represent the refractive properties of the optical lens. According to an embodiment of the invention, the optical data represent the prescription of the wearer. The optical data may represent the design of the first and second surfaces, the position of the second relative to the first surface, for example, the thickness and prism of the optical lens and the optical index.

The observation data represent observation conditions in which the first and second markings are to be observed. The observation conditions may be defined by considering the observation device and the position of the manufactured lens in the observation device. The position of the manufactured optical lens in the observation device may be defined as the position of an optical lens reference frame and an observation device reference frame. The optical lens reference frame can be defined using the blocker if the lens has been maintained on the blocker, or by the normal to one of the surfaces of the optical lens passing through the prism reference point as defined by a harmonized standard ISO 8980.

Advantageously, determining the relative positions of the two surfaces is rendered much easier, in particular when the observation of the first and second markings is realized in the observation conditions.

According to an embodiment of the invention, the second markings are determined so as to appear at the same position as the first markings in the observation conditions when the second surface is correctly positioned relatively to the first surface. Therefore, in the observation condition the second and first markings appear superimposed when the second surface is correctly positioned relatively to the first surface.

Therefore, a sorting of the manufactured optical lenses can be easily implemented.

According to an embodiment of the invention illustrated on figure 4A and 4B, the second markings may be determined so as to take into account a positioning error tolerance.

For example as illustrated on figure 4A, the second markings 112 may have circular shapes and be determined so as to appear centered over the first markings 111 in the observing conditions when the second surface is correctly positioned relatively to the first surface. The radius of the circular shaped second markings may be determined based on an error position tolerance.

Therefore, when the positioning error of the second and first surfaces is greater than the error position tolerance, the first markings appear outside the second markings, as illustrated on figure 4B.

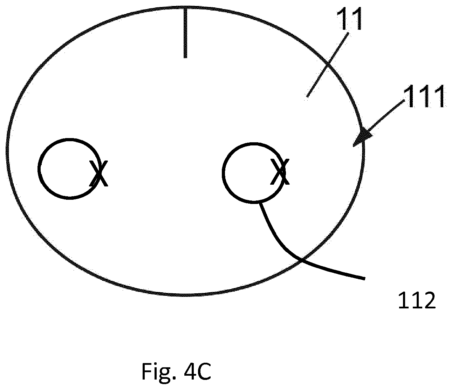

However, when the positioning error of the second and first surfaces is smaller than the error position tolerance, the first markings appear inside the second markings, as illustrated on figure 4C.

According to an embodiment of the invention, the second markings providing step is realized with the same machining device as the machining step and the optical lens is maintained in same position. Advantageously, having the optical lens maintained in the same position during the machining and second markings providing steps guaranties that no positioning error is introduced between the second markings and the second surface.

As illustrated on figure 1, according to an embodiment of the invention, the method may further comprise after the second marking providing step:
- a reference system determining step S7, and
- a comparison step S8.

Advantageously, these additional steps allow determining the relative position of the first and second surface of the machined optical lens.

During the reference system determining step S7, the positions of the first and second markings are determined in the observation conditions corresponding to the observation data. The first and second reference systems can be determined based on the positions of the first and second markings.

The positioning error between the first and second surfaces is determined by comparing the positions of the first and second reference systems during the comparison step S8.

According to an embodiment of the invention, the positions of the first and second reference systems are compared in a common reference system, for example in the manufactured optical lens reference frame. As indicated previously, the optical lens reference frame can be defined using the blocker if the lens has been maintained on the blocker, or by the normal to one of the surfaces of the optical lens passing between the reference-markings that have been made mandatory by a harmonized standard ISO 8980.

According to an embodiment of the invention, the relative position between the first and second markings is determined in the observation condition by an operator. For example, the observation condition may consist in placing the optical lens at a predetermined distance of a light source and of the operator's eye. During the second markings determining step, the second markings may be determined so as to appear to the operator superimposed with the first marking when the second surface is correctly positioned relative to the first surface or as illustrated on figure 4a to 4C with an error tolerance.

Advantageously, the operator may very easily check the relative position of the first and second surfaces.

The observation condition could also be having an image of a light source be projected on to a screen through the machined optical lens. The operator could then observe the markings on the projection screen.

As illustrated on figure 1, the method according to the invention may also comprise a sorting step S9, during which the manufactured optical lens is accepted if the positioning error between the first and second surfaces is smaller than or equal to a threshold value and is set aside if the positioning error between the first and second surfaces is greater than said threshold value.

According to different embodiments of the invention, the threshold value may depend on the prescription of the wearer and/or the design of one or both surfaces and/or the curvature variations of one or both of the surfaces.

The invention also relates to a method for controlling a lens manufacturing process. The method for controlling a lens manufacturing process comprises the steps of:
a) manufacturing an optical lens according to a manufacturing method of the invention using a manufacturing device,
b) determining the positioning error of the first and second surfaces of the optical lens,
c) recording the determined positioning error,
d) repeating regularly step a) to c) and checking over time the evolution of the positioning error.

The evolution of at least one parameter of the manufacturing device used during the lens manufacturing process is checked over time and the evolution over time of the positioning error of the first and second surfaces of the optical lens is related with the evolution over time of the at least one parameter of the manufacturing device.

Advantageously, the method according to the invention allows controlling certain method or device parameters of the machining process. Indeed, the position error can be correlated to some of the machining device parameters, thus controlling the evolution over time of the positioning error can help identify a drift or shift of a machining device parameter.

According to an embodiment of the invention, the optical lenses manufactured when repeating step a) may be different optical lenses from one repetition to the other.

According to an embodiment of the invention the optical lens manufactured during step a) may be a master lens.

The master lens has a different geometrical and/or optical parameter and/or is made of a different material than the lenses to be manufactured during the manufacturing process.

The choice of the master lens can be done so as to simplify the observation conditions, for example the master lens may comprise two plane and parallel surfaces.

The choice of the master lens can be done so as to amplify the sensibility of certain parameter to the process parameters. For example, the master lens is made of a material and has a design such as its optical parameters are more sensible to a modification of the process parameter that the usual manufactured lenses.

Advantageously, the use of a master lens makes the correlation between a shift in the positioning error and a parameter of the manufacturing device used during the lens manufacturing process easier and more reliable.

For example, the master lens may be manufactured daily or several times per day or a regular basis not every day so as to check the parameters of the manufacturing device.

The invention has been described above with the aid of embodiments without limitation of the general inventive concept.

## Claims

1. Method of manufacturing an optical lens, the method comprising:
• a lens member (10) providing step (S1) during which a lens member (10) comprising a first surface (11) and a first reference system of the first surface (11) is provided, the first reference system being identified by first markings (111) on the first surface (11),
• a surface data providing step (S2) during which surface data corresponding to a second surface (12) and the position of the second surface (12) relative to the first surface (11) of the optical lens to be manufactured are provided,
• a lens member blocking step (S3) during which the lens member (10) is blocked in a machining position,
• a machining step (S4) during which the second surface (12) of the optical lens is machined according to the surface data, **characterised in that** the method further comprises:
• a second markings (112) determining step (S5) during which second markings (112) identifying a second reference system of the second surface (12) are determined according at least to optical data representing the refractive properties of the optical lens and to observation data representing observation conditions in which the first (111) and second markings (112) are to be observed, and
• a second markings (112) providing step (S6) during which the second markings (112) are provided on the second surface (12) of the optical lens.

2. The method according to claim 1, wherein the method further comprises:
• an reference system determining step (S7) during which the first and second reference systems are determined by determining the positions of the first (111) and second markings (112) in the observation conditions corresponding to the observation data, and
• a comparison step (S8) during which the positions of the first and second reference systems are compared so as to determine the positioning error between the first (11) and second surfaces (12).

3. The method according to claim 2, wherein the method further comprises a sorting step (S9) during which the manufactured optical lens is accepted if the positioning error between the first (11) and second surfaces (12) is smaller than or equal to a threshold value and is set aside if the positioning error between the first (11) and second surfaces (12) is greater than said threshold value.

4. The method according to claim 2 or 3, wherein during the reference system determining step the positions on the first (111) and second markings (112) are measured using a measuring optical device and the observation data represents at least the position of the optical lens relative to the measuring optical device.

5. The method according to claim 2 or 3, wherein during the reference system determining step, the relative position between the first (111) and second markings (112) is determined in the observation conditions by an operator.

6. The method according to any of the preceding claims, wherein during the second marking (112) determining step the second markings (112) are determined so as to appear at the same position as the first markings (111) in the observation conditions when the second surface (12) is correctly positioned relatively to the first surface (11).

7. The method according to any of the preceding claims, wherein during the second marking (112) determining step the second markings (112) are determined so as to take into account a positioning error tolerance.

8. The method according to any of the preceding claims, wherein the optical data represent at least the design of the first (11) and second surfaces (12) and the relative position of the second surface (12) relative to the first surface (11).

9. The method according to any of the preceding claims, wherein during the second markings (112) providing step the optical lens is blocked in the same position as during the machining step.

10. The method according to any of the preceding claims, wherein the first (111) and/or second markings (112) are temporary markings.

11. The method according to any of the preceding claims, wherein the optical data represent at least the prescription of the wearer for which the optical lens is manufactured.

12. A method for controlling a lens manufacturing process comprising:
• an optical lens manufacturing step during which an optical lens is manufactured according to a manufacturing method as claimed in any of the preceding claims using a manufacturing device,
• a positioning error determining step during which the positioning error of the first (11) and second surfaces (12) of the optical lens is determined,
• a recording step during which the positioning error is recorded,
wherein, the method further comprises repeating regularly optical lens manufacturing, positioning error determining and recording steps and checking the evolution of the positioning error over time, and the evolution of at least one parameter of the manufacturing device used during the lens manufacturing process is checked over time and the evolution over time of the positioning error of the first (11) and second surfaces (12) of the optical lens is related with the evolution over time of the at least one parameter of the manufacturing device.

13. A method for controlling a lens manufacturing process comprising:
• a master lens manufacturing step during which a master lens is manufactured according to a manufacturing method as claimed in any of claims 1 to 10 using a manufacturing device,
• a positioning error determining step during which the positioning error of the first (11) and second surfaces (12) of the master lens is determined,
• a recording step during which the positioning error is recording,
wherein, the method further comprises repeating regularly master lens manufacturing, positioning error determining and recording steps and checking the evolution of the positioning error over time, and the evolution of at least one parameter of the manufacturing device used during the lens manufacturing process is checked over time and the evolution over time of the positioning error of the first (11) and second surfaces (12) of the master lens is related with the evolution over time of the at least one parameter of the manufacturing device.

14. A computer program product comprising one or more stored sequences of instructions that are accessible to a processor and which, when executed by the processor, causes the processor to carry out the steps of any of claims 1 to 13.

15. A computer readable medium carrying one or more sequences of instructions of the computer program product of claim 14.

## Patentansprüche

1. Verfahren zum Fertigen einer optischen Linse, wobei das Verfahren umfasst:
• einen Linsenelement (10) bereitstellenden Schritt (S1), während dessen ein Linsenelement (10), welches eine erste Oberfläche (11) und ein erstes Referenzsystem der ersten Oberfläche (11) umfasst, bereitgestellt wird, wobei das erste Referenzsystem durch erste Markierungen (111) auf der ersten Oberfläche (11) identifiziert wird,
• einen Oberflächendaten bereitstellenden Schritt (S2), während dessen Oberflächendaten, die einer zweiten Oberfläche (12) und der Position der zweiten Oberfläche (12) relativ zu der ersten Oberfläche (11) der zu fertigenden optischen Linse entsprechen, bereitgestellt werden,
• einen Linsenelement blockierenden Schritt (S3), während dessen das Linsenelement (10) in einer Maschinenbearbeitungsposition blockiert wird,
• einen maschinellen Bearbeitungsschritt (S4), während dessen die zweite Oberfläche (12) der optischen Linse gemäß den Oberflächendaten maschinell bearbeitet wird, **dadurch gekennzeichnet, dass** das Verfahren ferner umfasst:
• einen zweiten Markierungen (112) ermittelnden Schritt (S5), während dessen zweite Markierungen (112), die ein zweites Referenzsystem der zweiten Oberfläche (12) identifizieren, gemäß mindestens optischen Daten, die die refraktiven Eigenschaften der optischen Linse repräsentieren, und Beobachtungsdaten ermittelt werden, die Beobachtungsbedingungen repräsentieren, unter denen die ersten (111) und zweiten Markierungen (112) beobachtet werden sollen, und
• einen zweiten Markierungen (112) bereitstellenden Schritt (S6), während dessen die zweiten Markierungen (112) auf der zweiten Oberfläche (12) der optischen Linse bereitgestellt werden.

2. Verfahren nach Anspruch 1, wobei das Verfahren ferner umfasst:
• einen Referenzsystem ermittelnden Schritt (S7), während dessen das erste und zweite Referenzsystem ermittelt werden, indem die Positionen der ersten (111) und zweiten Markierung (112) unter den Beobachtungsbedingungen ermittelt werden, die den Beobachtungsdaten entsprechen, und
• einen Vergleichsschritt (S8), während dessen die Positionen des ersten und zweiten Referenzsystems verglichen werden, um so den Positionierungsfehler zwischen der ersten (11) und der zweiten Oberfläche (12) zu ermitteln.

3. Verfahren nach Anspruch 2, wobei das Verfahren ferner einen Sortierschritt (S9) umfasst, während dessen die gefertigte optische Linse akzeptiert wird, falls der Positionierungsfehler zwischen der ersten (11) und zweiten Oberfläche (12) kleiner als oder gleich einem Schwellenwert ist, und aussortiert wird, falls der Positionierungsfehler zwischen der ersten (11) und zweiten Oberfläche (12) größer als der Schwellenwert ist.

4. Verfahren nach Anspruch 2 oder 3, wobei während des Referenzsystem ermittelnden Schritts die Positionen auf der ersten (111) und zweiten Markierung (112) unter Verwendung einer optischen Messvorrichtung gemessen werden, und die Beobachtungsdaten mindestens die Position der optischen Linse relativ zu der optischen Messvorrichtung repräsentieren.

5. Verfahren nach Anspruch 2 oder 3, wobei die relative Position zwischen der ersten (111) und zweiten Markierung (112) während des Referenzsystem ermittelnden Schritts unter den Beobachtungsbedingungen durch eine Bedienungsperson ermittelt wird.

6. Verfahren nach einem der vorhergehenden Ansprüche, wobei die zweiten Markierungen (112) während des zweite Markierung (112) ermittelnden Schritts so ermittelt werden, dass sie an derselben Position wie die ersten Markierungen (111) unter den Beobachtungsbedingungen erscheinen, wenn die zweite Oberfläche (12) relativ zu der ersten Oberfläche (11) korrekt positioniert ist.

7. Verfahren nach einem der vorhergehenden Ansprüche, wobei die zweiten Markierungen (112) während des zweite Markierung (112) ermittelnden Schritts so ermittelt werden, dass sie eine Positionierungsfehlertoleranz berücksichtigen.

8. Verfahren nach einem der vorhergehenden Ansprüche, wobei die optischen Daten mindestens das Design der ersten (11) und zweiten Oberfläche (12) und die relative Position der zweiten Oberfläche (12) relativ zu der ersten Oberfläche (11) repräsentieren.

9. Verfahren nach einem der vorhergehenden Ansprüche, wobei während des zweite Markierungen (112) bereitstellenden Schritts die optische Linse in derselben Position wie während des maschinellen Bearbeitungsschritts blockiert wird.

10. Verfahren nach einem der vorhergehenden Ansprüche, wobei die erste (111) und/oder zweite Markierung (112) temporäre Markierungen sind.

11. Verfahren nach einem der vorhergehenden Ansprüche, wobei die optischen Daten mindestens die Verordnung des Trägers repräsentieren, für den die optische Linse gefertigt wird.

12. Verfahren zum Steuern eines Linsenfertigungsprozesses, umfassend:
• einen Fertigungsschritt für optische Linsen, während dessen eine optische Linse gemäß einem Fertigungsverfahren nach einem der vorhergehenden Ansprüche unter Verwendung einer Fertigungsvorrichtung gefertigt wird,
• einen Positionierungsfehler ermittelnden Schritt, während dessen der Positionierungsfehler der ersten (11) und zweiten Oberfläche (12) der optischen Linse ermittelt wird,
• einen Aufzeichnungsschritt, während dessen der Positionierungsfehler aufgezeichnet wird,
wobei das Verfahren ferner regelmäßiges Wiederholen der Schritte des Fertigens optischer Linsen, Ermittelns des Positionierungsfehlers und Aufzeichnens sowie Kontrollieren der Entwicklung des Positionierungsfehlers im Zeitverlauf umfasst, und wobei die Entwicklung von mindestens einem Parameter der während des Linsenfertigungsprozesses verwendeten Fertigungsvorrichtung im Zeitverlauf kontrolliert wird und die Entwicklung des Positionierungsfehlers der ersten (11) und zweiten Oberfläche (12) der optischen Linse mit der Entwicklung des mindestens einen Parameters der Fertigungsvorrichtung in Beziehung gesetzt wird.

13. Verfahren zum Steuern eines Linsenfertigungsprozesses, umfassend:
• einen Fertigungsschritt für eine Masterlinse, während dessen eine Masterlinse gemäß einem Fertigungsverfahren nach einem der Ansprüche 1 bis 10 unter Verwendung einer Fertigungsvorrichtung gefertigt wird,
• einen Positionierungsfehler ermittelnden Schritt, während dessen der Positionierungsfehler der ersten (11) und zweiten Oberfläche (12) der Masterlinse ermittelt wird,
• einen Aufzeichnungsschritt, während dessen der Positionierungsfehler aufgezeichnet wird,
wobei das Verfahren ferner regelmäßiges Wiederholen der Schritte des Fertigens von Masterlinse(n), Ermittelns des Positionierungsfehlers und Aufzeichnens sowie Kontrollieren der Entwicklung des Positionierungsfehlers im Zeitverlauf umfasst, und wobei die Entwicklung von mindestens einem Parameter der während des Linsenfertigungsprozesses verwendeten Fertigungsvorrichtung im Zeitverlauf kontrolliert wird und die Entwicklung des Positionierungsfehlers der ersten (11) und zweiten Oberfläche (12) der Masterlinse mit der Entwicklung des mindestens einen Parameters der Fertigungsvorrichtung in Beziehung gesetzt wird.

14. Computerprogrammprodukt, umfassend eine oder mehrere gespeicherte Abfolgen von Anweisungen, die einem Prozessor zugänglich sind und bei Ausführung durch den Prozessor bewirken, dass der Prozessor die Schritte gemäß einem der Ansprüche 1 bis 13 durchführt.

15. Computerlesbares Medium, das die eine oder mehreren Abfolgen von Anweisungen des Computerprogrammprodukts nach Anspruch 14 trägt.

## Revendications

1. Procédé de fabrication d'un verre optique, le procédé comprenant :
- une étape de fourniture (S1) d'un élément de verre (10) pendant laquelle un élément de verre (10) comprenant une première surface (11) et un premier système de référence de la première surface (11) est fourni, le premier système de référence étant identifié par des premiers repères (111) sur la première surface (11) ,
- une étape de fourniture (S2) de données de surface pendant laquelle des données de surface correspondant à une seconde surface (12) et la position de la seconde surface (12) par rapport à la première surface (11) du verre optique à fabriquer sont fournies,
- une étape de blocage (S3) d'élément de verre pendant laquelle l'élément de verre (10) est bloqué dans une position d'usinage,
- une étape d'usinage (S4) pendant laquelle la seconde surface (12) du verre optique est usinée en fonction des données de surface, **caractérisé en ce que** le procédé comprend en outre :
- une étape de détermination (S5) de seconds repères (112) pendant laquelle des seconds repères (112) identifiant un second système de référence de la seconde surface (12) sont déterminés en fonction d'au moins les données optiques représentant les propriétés de réfraction du verre optique et de données d'observation représentant des conditions d'observation dans lesquelles les premiers (111) et seconds repères (112) doivent être observés, et
- une étape de fourniture (S6) de seconds repères (112) pendant laquelle les seconds repères (112) sont prévus sur la seconde surface (12) du verre optique.

2. Procédé selon la revendication 1, le procédé comprenant en outre :
- une étape de détermination (S7) de système de référence pendant laquelle les premier et second systèmes de référence sont déterminés en déterminant les positions des premiers (111) et seconds repères (112) dans les conditions d'observation correspondant aux données d'observation, et
- une étape de comparaison (S8) pendant laquelle les positions des premier et second systèmes de référence sont comparées de façon à déterminer l'erreur de positionnement entre les première (11) et seconde surfaces (12).

3. Procédé selon la revendication 2, le procédé comprenant en outre une étape (S9) de tri pendant laquelle le verre optique fabriqué est accepté si l'erreur de positionnement entre les première (11) et seconde surfaces (12) est inférieure ou égale à une valeur seuil et est mis de côté si l'erreur de positionnement entre les première (11) et seconde surfaces (12) est supérieure à ladite valeur seuil.

4. Procédé selon la revendication 2 ou 3, dans lequel pendant l'étape de détermination de système de référence, les positions sur les premier (111) et second repères (112) sont mesurées à l'aide d'un dispositif optique de mesure et les données d'observation représentent au moins la position du verre optique par rapport au dispositif optique de mesure.

5. Procédé selon la revendication 2 ou 3, dans lequel pendant l'étape de détermination de système de référence, la position relative entre les premiers (111) et seconds repères (112) est déterminée dans les conditions d'observation par un opérateur.

6. Procédé selon l'une quelconque des revendications précédentes, dans lequel pendant l'étape de détermination des seconds repères (112), les seconds repères (112) sont déterminés de façon à apparaître à la même position que les premiers repères (111) dans les conditions d'observation lorsque la seconde surface (12) est correctement positionnée par rapport à la première surface (11).

7. Procédé selon l'une quelconque des revendications précédentes, dans lequel pendant l'étape de détermination des seconds repères (112), les seconds repères (112) sont déterminés de façon à prendre en compte une tolérance d'erreur de positionnement.

8. Procédé selon l'une quelconque des revendications précédentes, dans lequel les données optiques représentent au moins la conception des première (11) et seconde surfaces (12) et la position relative de la seconde surface (12) par rapport à la première surface (11) .

9. Procédé selon l'une quelconque des revendications précédentes, dans lequel pendant l'étape de fourniture des seconds repères (112), le verre optique est bloqué dans la même position que pendant l'étape d'usinage.

10. Procédé selon l'une quelconque des revendications précédentes, dans lequel les premier (111) et/ou seconds repères (112) sont des repères temporaires.

11. Procédé selon l'une quelconque des revendications précédentes, dans lequel les données optiques représentent au moins l'ordonnance de l'utilisateur pour lequel le verre optique est fabriqué.

12. Procédé de commande d'un procédé de fabrication de verre comprenant :
- une étape de fabrication de verre optique pendant laquelle un verre optique est fabriqué en fonction d'un procédé de fabrication selon l'une quelconque des revendications précédentes à l'aide d'un dispositif de fabrication,
- une étape de détermination d'erreur de positionnement pendant laquelle l'erreur de positionnement des première (11) et seconde surfaces (12) du verre optique est déterminée,
- une étape d'enregistrement pendant laquelle l'erreur de positionnement est enregistrée,
dans lequel, le procédé consiste en outre à répéter régulièrement les étapes de fabrication de verre optique, détermination d'erreur de positionnement et enregistrement et à vérifier l'évolution de l'erreur de positionnement avec le temps, et l'évolution d'au moins un paramètre du dispositif de fabrication utilisé pendant le procédé de fabrication du verre est vérifiée dans le temps et l'évolution dans le temps de l'erreur de positionnement des première (11) et seconde surfaces (12) du verre optique est mise en relation avec l'évolution dans le temps de l'au moins un paramètre du dispositif de fabrication.

13. Procédé de commande d'un procédé de fabrication de verre comprenant :
- une étape de fabrication de verre principal pendant laquelle un verre principal est fabriqué en fonction d'un procédé de fabrication selon l'une quelconque des revendications 1 à 10 à l'aide d'un dispositif de fabrication,
- une étape de détermination d'erreur de positionnement pendant laquelle l'erreur de positionnement des première (11) et seconde surfaces (12) du verre principal est déterminée,
- une étape d'enregistrement pendant laquelle l'erreur de positionnement est enregistrée,
dans lequel, le procédé consiste en outre à répéter régulièrement les étapes de fabrication de verre principal, détermination d'erreur de positionnement et enregistrement et à vérifier l'évolution de l'erreur de positionnement avec le temps, et l'évolution d'au moins un paramètre du dispositif de fabrication utilisé pendant le procédé de fabrication de verre est vérifiée dans le temps et l'évolution dans le temps de l'erreur de positionnement des première (11) et seconde surfaces (12) du verre principal est mise en relation avec l'évolution dans le temps de l'au moins un paramètre du dispositif de fabrication.

14. Produit-programme informatique comprenant une ou plusieurs séquences mémorisées d'instructions qui sont accessibles à un processeur et qui, lorsqu'elles sont exécutées par le processeur, amènent le processeur à réaliser les étapes selon l'une quelconque des revendications 1 à 13.

15. Support lisible par ordinateur portant une ou plusieurs séquences d'instructions du produit-programme informatique selon la revendication 14.
